# EUROPEAN PATENT APPLICATION

(11) **EP 2 498 394 A1**
(43) Date of publication of application: **12.09.2012**
(21) Application number: 09851101.7
(22) Date of filing: 06.11.2009
(51) Int. Cl.: H02P 9/14

(54) **VEHICLE GENERATED VOLTAGE CONTROL DEVICE**

(71) Applicant: Mitsubishi Electric Corporation, Tokyo 100-8310 (JP)
(72) Inventor: SUMIMOTO Katsuyuki, Tokyo 100-8310 (JP); SASAKI Junya, Tokyo 100-8310 (JP)
(74) Representative: HOFFMANN EITLE
(86) International application number: PCT/JP2009/068987
(87) International publication number: WO 2011/055449

(57) **Abstract**

A vehicle power generation voltage control apparatus is obtained, which has improved reliability, when in a faulty condition, of controlling an exciting current flowing through a field winding even if a monitor and detection circuit becomes faulty. An output voltage of a vehicle power generator or a battery terminal voltage connected to the vehicle power generator is detected by plural monitor and detection circuits, and according to the output of the plural monitor and detection circuits, an exciting current flowing through a field winding of the vehicle power generator is switched on and off, to control the output voltage of the vehicle power generator or the battery terminal voltage connected to the vehicle power generator to be a target voltage.

## Description

### TECHNICAL FIELD

This invention relates to a vehicle power generation voltage control apparatus for controlling a generated power voltage by a vehicle power generator mounted on, for example, a passenger car or a truck.

### BACKGROUND ART

Vehicle power generation voltage control apparatuses include a voltage control apparatus that controls an output voltage of a vehicle power generator or a terminal voltage of a battery connected to the vehicle power generator to be a target voltage by turning on and off a switching element connected in series with a field winding of a vehicle power generator. Generally, the voltage control apparatus has one input voltage monitor and detection circuit for one detection target (control target). There are also cases in which one monitor and detection circuit is provided for plural detection targets.

Conventionally, in the case that the monitor and detection circuit becomes faulty, for example, in the cases of a leakage fault of a smoothing capacitor, a fault in continuous output of a voltage comparator circuit, and a wire breakage fault in the circuit, the control voltage becomes higher or lower than the originally expected value, causing serious troubles in the vehicle voltage (such as an output voltage from the vehicle power generator). Conventionally, the faults of the voltage control apparatus have mainly been short circuits or open circuits of an exciting current control switching element. Various apparatus employ an alarming function or a safety function for preparing for such situations.

### REFERENCES

### PATENT DOCUMENTS

Patent Document 1: JP-A-2009-189140

### SUMMARY OF THE INVENTION

### PROBLEMS THAT THE INVENTION IS TO SOLVE

On the other hand, in recent years, safety measures against the fault of the monitor and detection circuit in addition to the fault of the exciting current control switching element have been demanded urgently, because of the size reduction of the semiconductor chip itself that serves for the control process of the voltage control apparatus, the size reduction of the smoothing capacitor built into the semiconductor chip, and the worsening of the thermal environment of the vehicle.
This invention has been accomplished in order to solve the foregoing problems, and it is an object of the invention to obtain a vehicle power generation voltage control apparatus that has improved reliability when in a faulty condition of controlling the exciting current flowing through the field winding even if the monitor and detection becomes faulty.

### MEANS FOR SOLVING THE PROBLEMS

This invention provides a vehicle power generation voltage control apparatus for controlling an output voltage of a vehicle power generator or a battery terminal voltage connected to the vehicle power generator to be a target voltage by switching on and off an exciting current flowing through a field winding of the vehicle power generator, wherein the output voltage of the vehicle power generator or the battery terminal voltage connected to the vehicle power generator is detected by a plurality of monitor and detection circuits, and the exciting current flowing through the field winding of the vehicle power generator is switched on and off according to an output of the plurality of monitor and detection circuits, to control the output voltage of the vehicle power generator or the battery terminal voltage connected to the vehicle power generator to be the target voltage.

This invention also provides a vehicle power generation voltage control apparatus for controlling an output voltage of a vehicle power generator or a battery terminal voltage connected to the vehicle power generator to be a target voltage by switching on and off an exciting current flowing through a field winding of the vehicle power generator, including: plural monitor and detection circuits, each of the monitor and detection circuits comparing a reference voltage to an input voltage detected by receiving the output voltage of the vehicle power generator or the battery terminal voltage connected to the vehicle power generator, and generating an output if the input voltage is lower than the reference voltage; and a control process unit generating an output on the condition that all of the plural monitor and detection circuits generate an output indicating that the input voltage has become lower than the reference voltage, wherein the exciting current is passed through the field winding of the vehicle power generator according to the output of the control process unit, to control the output voltage of the vehicle power generator or the battery terminal voltage connected to the vehicle power generator to be the target voltage.

### ADVANTAGEOUS EFFECTS OF THE INVENTION

The vehicle power generation voltage control apparatus according to this invention detects the output voltage of the vehicle power generator or the battery terminal voltage connected to the vehicle power generator by plural monitor and detection circuits. This makes it possible to improve the reliability when in a faulty condition of controlling the exciting current flowing through the field winding.

In addition, the vehicle power generation voltage control apparatus according to this invention has: plural monitor and detection circuits, each of the monitor and detection circuits receiving the output voltage of the vehicle power generator or the battery terminal voltage connected to the vehicle power generator, comparing the detected input voltage to a reference voltage, and generating an output if the input voltage is lower than the reference voltage; and a control process unit generating an output on the condition that all of the plural monitor and detection circuits generate an output indicating that the input voltage has become lower than the reference voltage. As a result, it becomes possible to improve the reliability when in a faulty condition of controlling the exciting current flowing through the field winding. At the same time, it becomes possible to prevent overcharging when in a faulty condition to improve the reliability.
The foregoing and other object, features, aspects, and advantages of the present invention will become more apparent from the following detailed description of the present invention when taken in conjunction with the accompanying drawings.

### BRIEF DESCRIPTION OF THE DRAWINGS

[Fig. 1] Fig. 1 is a configuration diagram showing a vehicle power generation voltage control apparatus according to a first preferred embodiment of the invention.
[Fig. 2] Fig. 2 is a view showing the configuration of a primary portion of the voltage control apparatus according to the first preferred embodiment.
[Fig. 3] Fig. 3 is a view showing the output states and the controlling results of various portions in a healthy condition and in faulty conditions according to the first preferred embodiment.
[Fig. 4] Fig. 4 is a view showing the configuration of a primary portion of a voltage control apparatus according to a second preferred embodiment, in which a portion thereof is implemented by software.

### DESCRIPTION OF EMBODIMENTS

### First Preferred Embodiment

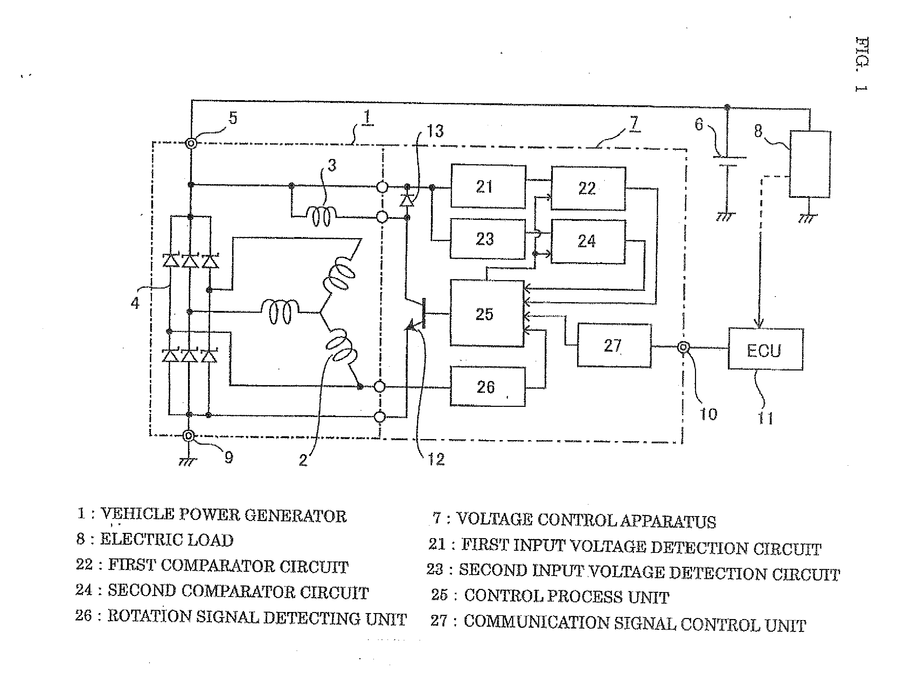

Fig. 1 is a configuration diagram showing a vehicle power generation voltage control apparatus according to a first preferred embodiment of the invention. A vehicle power generator 1 has a three-phase stator winding 2 contained in a stator, a field winding 3 contained in a rotor, and a rectifier circuit 4 for full-wave rectifying the three-phase output of the stator winding 2. An output voltage from an output terminal 5 of the vehicle power generator 1 (or a terminal voltage of a battery 6 connected to the power generator) is controlled by switching on and off an exciting current to the field winding 3 by a voltage control apparatus 7. The output terminal 5 is connected to the battery 6 and various types of electric load 8 via a charge wire. A ground terminal 9 is connected to the frame of the vehicle power generator 1. A terminal 10 is connected to an ECU 5 as an external control device.

A semiconductor switching element 12 is connected in series with a field winding 3, and when in an on state, exciting current passes through the field winding 3. A recirculating diode 13 is connected in parallel with the field winding 3, and when a switching element 12 is in an off state, it recirculates the exciting current. A first input voltage detection circuit 21 and a first comparator circuit 22 together form a pair, and they monitor and detect the power generator output voltage or the battery terminal voltage at the output terminal 5. Likewise, a second input voltage detection circuit 23 and a second comparator circuit 24 together form a pair, and they monitor and detect the power generator output voltage or the battery terminal voltage at the output terminal 5. In other words, each of the pairs (i.e., plural monitor and detection circuits) detects the same detection target. The output from each of the pairs is input to a control process unit 25. The control process unit 25 controls on and off of the switching element 12 according to the output from each of the pairs so that the power output voltage or the battery terminal voltage at the output terminal 5 to be a target voltage.

A rotation signal detecting unit 26 detects the rotational frequency of the vehicle power generator 1 by monitoring a phase voltage that appears in any phase of the stator winding 2, and it outputs a voltage corresponding to the detected rotational frequency, which is input to the control process unit 25. This enables the controlling according to the rotational frequency. For example, the upper limit of the duty of the switching element 12 is limited to 20% when the engine is not operating. A communication signal control unit 27 performs two-way serial communication with an ECU 11 via the terminal 10, and it receives and interprets communication frames that are periodically sent from the ECU 11 and inputs them into the control process unit 25. The communication frames transmitted from the ECU 11 include adjusting voltage (reference voltage) for controlling the output voltage of the vehicle power generator 1 to be constant.

The adjusting voltage works as follows. When the reference voltage is assumed to be 14 V, it is adjusted to be lowered to 10 V during acceleration of the vehicle while it is adjusted to be raised to 16 V during deceleration thereof. Also, the communication signal control unit 27 transmits communication frames to the ECU 11 via the terminal 10. The communication frames transmitted to the ECU 11 include power generator output voltage and data indicating the diagnosis results of whether abnormality is present or absent, such as fault information. The control process unit 25 executes power generation control for keeping the output voltage of the vehicle power generator 1 or the battery terminal voltage to be constant. The contents and control parameters of the power generation control are set based on the power generation control information contained in the communication frames that are transmitted from the ECU 11.

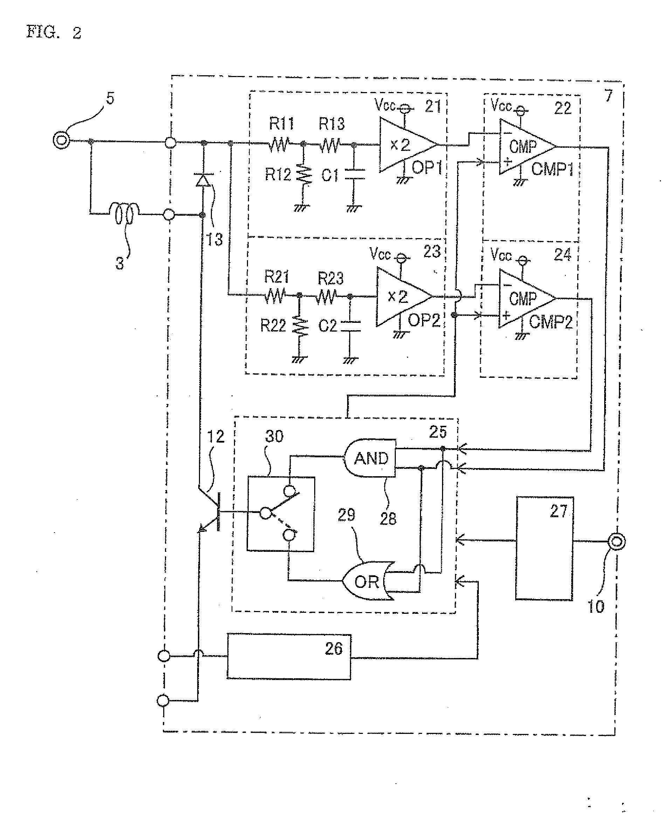

Fig. 2 is a configuration diagram mainly showing pairs of "input voltage detection circuits" and "comparator circuits" in the first preferred embodiment as well as a "control process unit". In the drawings, the same reference symbols refer to the same or corresponding parts. The power generator output voltage or the battery terminal voltage of the output terminal 5 is input to the first input voltage detection circuit 21 and the second input voltage detection circuit 23. In the first input voltage detection circuit 21, reference characters R11 and R12 refer to resistors for dividing the input voltage. A resistor R13 and a capacitor C1 form a CR filter formed of a semiconductor chip, and when obtaining a CR filter with a constant value, the capacitance C is usually small while the resistance value R is large in order to reduce the area. The voltage of the capacitor C1 is amplified by an operational amplifier OP1. The operational amplifier OP1 is connected to a constant voltage constant current power supply Vcc. The second input voltage detection circuit 23 has a like configuration, and it has a resistor R21, a resistor R22, a resistor R23, a capacitor C1 and an operational amplifier OP2.

The output voltage of the operational amplifier OP1 is input to the first comparator circuit 22. In the comparator CMP1 connected to the constant voltage constant current power supply Vcc, the output voltage of the operational amplifier OP1 is input to the inverted input terminal thereof, while a reference voltage (for example, 14 V) is input to the non-inverted terminal. The reference voltage is supplied from the control process unit 25. The comparator CMP1 outputs a logical value 0 (low level) if the output voltage of the operational amplifier OP1 (i.e., the input voltage that is input to the first input voltage detection circuit 21 and detected) is higher than the reference voltage, while the comparator CMP1 outputs a logical value 1 (high-level ON output) if the output voltage of the operational amplifier OP1 (i.e., the input voltage that is input to the first input voltage detection circuit 21 and detected) is lower than the reference voltage. Likewise, the output voltage of the operational amplifier OP2 is input to the second comparator circuit 24. To the comparator CMP2 of the second comparator circuit 24 as well, the output voltage of the operational amplifier OP2 input, and the reference voltage is input to the non-inverted terminal thereof. The reference voltage is supplied from the control process unit 25. The comparator CMP2 outputs a logical value 0 (low level) if the output voltage of the operational amplifier OP2 is higher than the reference voltage, while the comparator CMP2 outputs a logical value 1 (high-level ON output) if the output voltage of the operational amplifier OP2 is lower than the reference voltage.

The outputs from the comparators CMP1 and CMP2 are input to the control process unit 25, and are respectively input to an AND circuit 28 and an OR circuit 29. If both the outputs of the comparators CMP1 and CMP2 are at a high level (ON output), (in other words, if the input voltage by the power generator output voltage is lower than the reference voltage), both the outputs of the AND circuit 28 and the OR circuit 29 become the high level. Therefore, if a selector switch 30 is in a connection state shown in the figure, the output of the AND circuit 28 (high level) is applied to the base of the switching element 12, and the switching element 12 is turned on. This permits electric current to flow through the field winding 3 of the vehicle power generator 1, generating magnetic flux in the field winding 3, which induces electric current and generates voltage in the stator winding 2. Then, when the input voltage by the voltage of the output terminal of the vehicle power generator 1 exceeds the reference voltage, both the outputs of the comparators CMP1 and CMP2 become the low level (i.e., the input voltage by the power generator output voltage becomes higher than the reference voltage). This causes the switching element 12 to be turned off by the output of the AND circuit 28 (low level), which blocks the current through the field winding 3 of the vehicle power generator 1, and the voltage of the stator winding 2 starts to decrease. Then, the input voltage by the voltage of the output terminal of the vehicle power generator 1 becomes lower than the reference voltage again, and both the outputs of the comparators CMP1 and CMP2 become the high level. Thereafter, these processes are repeated, and the power generator output voltage becomes the target voltage.

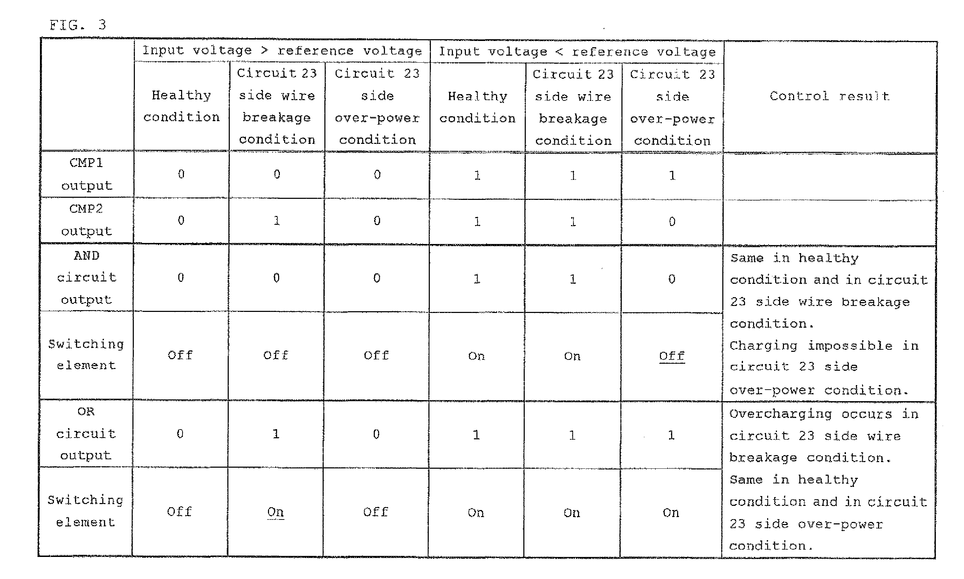

Next, the following describes the controlling results of the voltage control apparatus in the case where a wire breakage fault or an over-power fault occurs on either one side, for example, on the second input voltage detection circuit 23 side. It is assumed that the output voltage of the operational amplifier OP2 becomes 0 when a wire breakage fault occurs on the second input voltage detection circuit 23 side, while the output voltage of the operational amplifier OP2 results in an output higher than the reference voltage of the comparator CMP2 when an over-power fault occurs on the second input voltage detection circuit 23 side. It should be noted that the output voltage of the operational amplifier OP2 may become 0 or near 0 because of such causes as short circuits, leakage current increase, and resistance value variations, in addition to the wire breakage. The output voltage of the operational amplifier OP2 may result in an output higher than the reference voltage of the comparator CMP2 with the over-power fault because of such causes as short circuits, leakage current increase, and resistance value variations. Fig. 3 is a view showing the output states and the controlling results of various portions in a healthy condition and in faulty conditions according to the first preferred embodiment. The term "input voltage" means the input voltage from the output terminal 5 that is input to and detected by the input voltage detection circuit 21 or 23. The term "healthy condition" means that there is no fault in the input voltage detection circuit 21 or 23.

### (1) When the input voltage > the reference voltage:

(a) In a healthy condition, both the outputs of OMP1 and OMP2 become 0. Accordingly, the AND circuit output is 0, so the switching element is turned off by the selector switch 30 and charging is not performed. If the connection state of the selector switch 30 is on the OR circuit 29 side, the OR circuit output is 0, so the switching element is turned off, and charging is not performed. In this case, charging is not performed both on the AND circuit output side and on the OR circuit output side.

(b) In a circuit 23 side wire-breakage condition, the output of OMP1 becomes 0 and the output of OMP2 becomes 1. The AND circuit output is 0, so the switching element is turned off by the selector switch 30, and no charging is performed. If the connection state of the selector switch 30 is on the OR circuit 29 side, the OR circuit output is 1, so the switching element is turned ON, and overcharging is performed. In this case, the AND circuit output side is not charged but the OR circuit output side is overcharged, so the OR circuit output side cannot be employed. In Fig. 3, there is a problem in the ON state of the switching element on the OR circuit output side, so the problem is indicated by underline the "ON".

(c) In a circuit 23 side over-power condition, both the outputs of OMP1 and OMP2 become 0. Accordingly, the AND circuit output is 0, so the switching element is turned off by the selector switch 30, and charging is not performed. If the connection state of the selector switch 30 is on the OR circuit 29 side, the OR circuit output is 0, so the switching element is turned off, and charging is not performed. In this case, charging is not performed both on the AND circuit output side and on the OR circuit output side.

### (2) When the input voltage < the reference voltage:

(a) In the healthy condition, both the outputs of OMP1 and OMP2 become 1. Accordingly, the AND circuit output is 1, so the switching element is turned on by the selector switch 30, and charging is performed. If the connection state of the selector switch 30 is on the OR circuit 29 side, the OR circuit output is 1, so the switching element is turned ON, and charging is performed. In this case, charging is performed both on the AND circuit output side and on the OR circuit output side.

(a) In a circuit 23 side wire-breakage condition, both the outputs of OMP1 and OMP2 become 1. Accordingly, the AND circuit output is 1, so the switching element is turned on by the selector switch 30, and charging is performed. If the connection state of the selector switch 30 is on the OR circuit 29 side, the OR circuit output is 1, so the switching element is turned ON, and charging is performed. In this case, charging is performed both on the AND circuit output side and on the OR circuit output side.

(b) In a circuit 23 side over-power condition, the output of OMP1 becomes 1 and the output of OMP2 becomes 0. The AND circuit output is 0, so the switching element is turned off by the selector switch 30, and no charging is performed. If the connection state of the selector switch 30 is on the OR circuit 29 side, the OR circuit output is 1, so the switching element is turned ON, and charging is performed. In this case, the AND circuit output side is not charged but the OR circuit output side is charged, so, basically, the AND circuit output side cannot be employed. In Fig. 3, there is a problem in the OFF state of the switching element on the AND circuit output side, so the problem is indicated by underline the "OFF".

Referring to Fig. 3, the controlling results of the voltage control apparatus in the case where a wire breakage fault or an over-power fault occurs on either one of the input voltage detection circuits have been described. Based on these controlling results, it will be examined whether the selector switch 30 of the control process unit 25 should be connected to the AND circuit 28 side or the OR circuit 29. A problem is a case (1) in which, when the input voltage > the reference voltage, the switching element is turned on on the OR circuit side in the circuit 23 side wire breakage condition and overcharging is performed. Another problem is a case (2) in which, when input voltage < reference voltage, the switching element is turned off on the AND circuit side in the circuit 23 side over-power condition and charging is not performed.

When comparing these problematic cases (1) and (2) with each other, the adverse effect of the fault is more serious in the case (1), in which overcharging occurs, than in the case (2), in which charging is not performed. Specifically, overcharging of the battery connected to the power generator leads to a serious fault in which the battery breaks. For this reason, in the first preferred embodiment, the selector switch 30 of the control process unit 25 is connected to the AND circuit 28 side. That is, the outputs of the plural monitor and detection circuits are connected to the AND circuit 28, and the control process unit 25 is configured such as to generate an output on condition that the outputs indicating that the input voltage has become lower than the reference voltage are generated from all the plural monitor and detection circuits. Thereby, overcharge can be prevented even if a wire breakage fault or an over-power fault occurs in any one of the plural monitor and detection circuits, and the reliability is improved. It is also possible to connect the selector switch 30 of the control process unit 25 to the OR circuit 29 side in such a situation that the problem is more serious in the case (2), in which charging is not performed, than in the case (1), in which overcharge is performed.

Next, a soundness test at the time of shipping of the voltage control apparatus of Fig. 2 will be described. At the time of the soundness test, the switching signal from the communication signal control unit 27 is applied to the control process unit 25 to switch over the connection state of the selector switch 30 from the solid line side to the dotted line side. In other words, the connection state of the selector switch 30 is switched to the OR circuit 29 side. The switching of the connection state of the selector switch 30 may be carried out by applying a test mode signal that is never used in a normal condition, such as one with 5000 Hz, to the rotation signal detecting unit 26 and inputting this to the control process unit 25.

Here, a voltage higher than the target voltage is applied to the output terminal 5. Then, both the outputs of the comparators CMP1 and CMP2, to which the outputs of the operational amplifier OP1 and the operational amplifier OP2 are applied, become a low level if the first and second input voltage detection circuits 21 and 13 are both healthy. The output of the OR circuit 29 becomes a low level, and the low level is applied to the base of the switching element 12 via the selector switch 30, so the switching element 12 is turned off. However, if one of the first and second input voltage detection circuits 21 and 13 causes wire breakage, either one of the outputs of the comparators CMP1 and CMP2 becomes a high level, and the output of the OR circuit 29 becomes a high level. Accordingly, the high level is applied to the base of the switching element 12 via the selector switch 30, and the switching element 12 is turned on. Therefore, the wire breakage of one of the first and second input voltage detection circuits 21 and 13 can be detected by the output of the OR circuit 29, i.e., by the switching element 12 being turned on.

### Second Preferred Embodiment

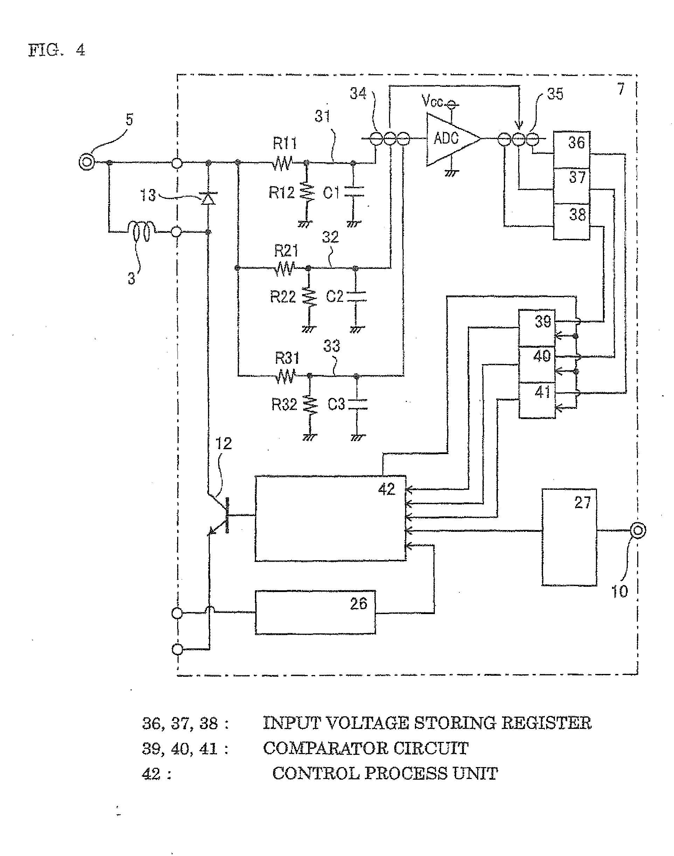

Fig. 4 is a view showing the configuration of a primary portion of a voltage control apparatus according to a second preferred embodiment, in which a portion thereof is implemented by software. In the second preferred embodiment, three monitor and detection circuits are provided for one detection target. The following primarily describes portions different from the first preferred embodiment. A resistor R11 and a resistor R22 divide an input voltage, which is the voltage of an output terminal 5. A capacitor C1 retains the voltage at the connection point between the resistor R11 and the resistor R12. The resistor R11, the resistor R12, and the capacitor C1 form a first input voltage retention circuit 31. Likewise, a resistor R21 and a resistor R22 divide the input voltage. A capacitor C2 retains the voltage at the connection point between the resistor R21 and the resistor R22. The resistor R21, the resistor R22, and the capacitor C2 form a second input voltage retention circuit 32. A resistor R31 and a resistor R32 divide the input voltage. A capacitor C3 retains the voltage at the connection point between the resistor R31 and the resistor R32. The resistor R31, the resistor R32, and the capacitor C3 form a third input voltage retention circuit 33.

A multiplexer 34 selects and extracts the voltages of the capacitors C1, C2, and C3 successively in a time-dividing manner, and inputs them to an A/D converter ADC. The A/D converter ADC converts the analog values of the voltages of the capacitors C1, C2, and C3 that have been input successively into respective digital values. The voltages of the capacitors C1, C2, and C3 that have been converted into the digital values are distributed respectively to a first input voltage storing register 36, a second input voltage storing register 37, and a third input voltage storing register 38 by a multiplexer 35. The multiplexer 34 and the multiplexer 35 are synchronized with each other, and the voltages of the capacitors C1, C2, and C3 are distributed successively and stored into the first input voltage storing register 36, the second input voltage storing register 37, and the third input voltage storing register 38. This process is repeated. By repeating this process, the digital values of the voltages of the capacitors C1, C2, and C3 at the present time are input to the input voltage storing registers 36, 37, and 38 and are updated.

Accordingly, the first input voltage storing register 36 stores and retains the digital value of the voltage of the capacitor C1 at the present time, the second input voltage storing register 37 stores and retains the digital value of the voltage of the capacitor C2 at the present time, and the third input voltage storing register 38 stores and retains the digital value of the voltage of the capacitor C3 at the present time. The first input voltage retention circuit 31, the multiplexers 34, 35, and the A/D converter ADC, and the first input voltage storing register 36 form a first input voltage detection circuit. The second input voltage retention circuit 32, the multiplexers 34, 35, and the A/D converter ADC, and the second input voltage storing register 37 form a second input voltage detection circuit. The third input voltage retention circuit 33, the multiplexers 34, 35, and the A/D converter ADC, and the third input voltage storing register 38 form a third input voltage detection circuit.

A first comparator circuit 39 compares the digital value of the input voltage stored in the third input voltage storing register 38 with the digital value of the reference voltage from a control process unit 42. If the digital value of the input voltage is greater than the digital value of the reference voltage, the first comparator circuit 39 inputs a low-level output to the control process unit 42, and if the digital value of the input voltage is less than the digital value of the reference voltage, the first comparator circuit 39 inputs a high-level output (ON output) to the control process unit 42. Likewise, a second comparator circuit 40 compares the digital value of the input voltage stored in the second input voltage storing register 37 with the digital value of the reference voltage from the control process unit 42. If the digital value of the input voltage is greater than the digital value of the reference voltage, the second comparator circuit 40 inputs a low-level output to the control process unit 42, and if the digital value of the input voltage is less than the digital value of the reference voltage, the second comparator circuit 40 inputs a high-level output to the control process unit 42. A third comparator circuit 41 compares the digital value of the input voltage stored in the first input voltage storing register 36 with the digital value of the reference voltage from the control process unit 42. If the digital value of the input voltage is greater than the digital value of the reference voltage, the third comparator circuit 41 inputs a low-level output to the control process unit 42, and if the digital value of the input voltage is less than the digital value of the reference voltage, the third comparator circuit 40 inputs a high-level output to the control process unit 42.

In the control process unit 42, when all the logical outputs of the comparator circuits 39, 40, and 41 are at the high level, a high-level logical output is generated to turn the switching element 12 on, so that the power generator output voltage can be recovered to the reference voltage. On the other hand, when any one of the logical outputs of the comparator circuits 39, 40, and 41 is at the low level, a low-level logical output is generated to turn the switching element 12 off, so that overcharging of the power generator output voltage is prevented.

In the foregoing description, when all the logical outputs of the comparator circuits 39, 40, and 41 are at the high level, the switching element 12 is turned on to recover the power generator output voltage to the reference voltage. However, it is also possible to determine whether the logical outputs of the comparator circuits 39, 40, and 41 are at the high level or the low level by majority rule. More specifically, in this case, it is possible to employ such a configuration that, when two or more logical outputs are at the high level, the switching element 12 is turned on, while when two or more logical outputs are at the low level, the switching element 12 is turned off. When the logical outputs of the comparator circuits 39, 40, and 41 are determined by majority rule, it is possible to control the input voltage to be normal even when a fault occurs in any one of the three monitor and detection circuits for the input voltage.

In the second preferred embodiment as well, the soundness testing at the time of shipping can be conducted by determining whether or not the same output is generated for the logical outputs of the comparator circuits 39, 40, and 41.
Various modifications and alterations of this invention will be apparent to those skilled in the art without departing from the scope and spirit of this invention, and it should be understood that this is not limited to the illustrative embodiments set forth herein.

## Claims

1. A vehicle power generation voltage control apparatus for controlling an output voltage of a vehicle power generator or a battery terminal voltage connected to the vehicle power generator to be a target voltage by switching on and off an exciting current flowing through a field winding of the vehicle power generator, wherein
the output voltage of the vehicle power generator or the battery terminal voltage connected to the vehicle power generator is detected by a plurality of monitor and detection circuits, and
wherein the exciting current flowing through the field winding of the vehicle power generator is switched on and off according to an output of the plurality of monitor and detection circuits, to control the output voltage of the vehicle power generator or the battery terminal voltage connected to the vehicle power generator to be the target voltage.

2. A vehicle power generation voltage control apparatus for controlling an output voltage of a vehicle power generator or a battery terminal voltage connected to the vehicle power generator to be a target voltage by switching on and off an exciting current flowing through a field winding of the vehicle power generator, comprising:
a plurality of monitor and detection circuits, each of the monitor and detection circuits comparing a reference voltage to an input voltage detected by receiving the output voltage of the vehicle power generator or the battery terminal voltage connected to the vehicle power generator, and generating an output if the input voltage is lower than the reference voltage; and
a control process unit generating an output on the condition that all of the plurality of monitor and detection circuits generate an output indicating that the input voltage has become lower than the reference voltage,
wherein the exciting current is passed through the field winding of the vehicle power generator according to the output of the control process unit, to control the output voltage of the vehicle power generator or the battery terminal voltage connected to the vehicle power generator to be the target voltage.

3. The vehicle power generation voltage control apparatus according to claim 2, wherein:
each of the plurality of monitor and detection circuits has: an input voltage detection circuit receiving the output voltage of the vehicle power generator or the battery terminal voltage connected to the vehicle power generator and detecting an input voltage; and a comparator circuit comparing the input voltage detected by the input voltage detection circuit to a reference voltage and generating an output if the input voltage is lower than the reference voltage; and
the control process unit has an AND circuit generating an output on the condition that all the comparator circuits of the plurality of monitor and detection circuits generate an output indicating that the input voltage has become lower than the reference voltage.

4. The vehicle power generation voltage control apparatus according to claim 2 or 3, wherein:
the control process unit has an OR circuit generating an output on the condition that any one of the comparator circuits of the plurality of monitor and detection circuits generate an output indicating that the input voltage has become lower than the reference voltage; and
a wire breakage fault of the plurality of monitor and detection circuits is detected by an output of the OR circuit that is obtained when, as the output voltage of the vehicle power generator or the battery terminal voltage connected to the vehicle power generator, a voltage higher than the target voltage is input to the plurality of monitor and detection circuits.

5. A vehicle power generation voltage control apparatus for controlling an output voltage of a vehicle power generator or a battery terminal voltage connected to the vehicle power generator to be a target voltage by switching on and off an exciting current flowing through a field winding of the vehicle power generator, comprising:
three or more of a plurality of monitor and detection circuits, each of the monitor and detection circuits comparing a reference voltage to an input voltage detected by receiving the output voltage of the vehicle power generator or the battery terminal voltage connected to the vehicle power generator, and generating an output if the input voltage is lower than the reference voltage; and
a control process unit generating an output on the condition that, of the plurality of monitor and detection circuits, the number of the monitor and detection circuits generating an output indicating that the input voltage has become lower than the reference voltage is greater than the number of the monitor and detection circuits not generating the output indicating that the input voltage has become lower than the reference voltage,
wherein the exciting current is passed through the field winding of the vehicle power generator according to the output of the control process unit, to control the output voltage of the vehicle power generator or the battery terminal voltage connected to the vehicle power generator to be the target voltage.
